# EUROPÄISCHE PATENTSCHRIFT

(11) **EP 3 645 237 B1**
(45) Veröffentlichungstag und Bekanntmachung des Hinweises auf die Patenterteilung: **27.10.2021**
(21) Anmeldenummer: 18768833.8
(22) Anmeldetag: 06.09.2018
(51) Int. Cl.: B29C 49/46, B29C 49/56, B29C 49/48, B29C 49/06, B29C 49/12, B29C 49/36

(54) **VERFAHREN, VORRICHTUNG, ARBEITSRAD UND UMFORMSTATION FÜR DIE HERSTELLUNG VON GEFÜLLTEN BEHÄLTERN AUS TEMPERATURKONDITIONIERTEN VORFORMLINGEN**
METHOD, DEVICE, WORKING WHEEL, AND MOLDING STATION FOR PRODUCING FILLED CONTAINERS FROM TEMPERATURE-CONDITIONED PREFORMS
PROCÉDÉ, DISPOSITIF, ROUE DE TRAVAIL ET POSTE DE FORMAGE POUR LA FABRICATION DE RÉCIPIENTS REMPLIS À PARTIR DE PRÉFORMES THERMIQUEMENT CONDITIONNÉES

(30) Priorität: 08.09.2017 DE 102017008446
(43) Veröffentlichungstag der Anmeldung: 06.05.2020
(73) Patentinhaber: KHS Corpoplast GmbH, 22145 Hamburg (DE)
(72) Erfinder: BAUMGARTE, Rolf, 22926 Ahrensburg (DE); LINKE, Michael, 22159 Hamburg (DE); MEYER, Niels, 22869 Schenefeld (DE)
(74) Vertreter: Eisenführ Speiser
(86) Internationale Anmeldenummer: PCT/EP2018/074037
(87) Internationale Veröffentlichungsnummer: WO 2019/048557

(56) Entgegenhaltungen:
- EP-A1- 2 335 903
- US-A1- 2016 250 798

## Beschreibung

Die Erfindung betrifft ein Verfahren zur Herstellung von mit einem flüssigen Füllgut gefüllten Behältern aus thermisch konditionierten Vorformlingen aus einem thermoplastischen Material nach dem Oberbegriff von Anspruch 1, eine Umformstation zur Herstellung von mit einem flüssigen Füllgut gefüllten Behältern aus thermisch konditionierten Vorformlingen aus einem thermoplastischen Material nach dem Oberbegriff von Anspruch 8 sowie ein Arbeitsrad mit mehreren solcher Umformstationen nach dem Oberbegriff von Anspruch 15 und eine Vorrichtung zur Herstellung von mit einem flüssigen Füllgut gefüllten Behältern aus temperaturkonditionierten Vorformlingen aus einem thermoplastischen Material nach dem Oberbegriff von Anspruch 16.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE 43 40 291 A1). Typischerweise weist eine Blasmaschine eine Heizeinrichtung zum Temperieren bzw. zum thermischen Konditionieren der Vorformlinge sowie eine Blaseinrichtung mit wenigstens einer Blasstation auf, in deren Bereich der jeweils zuvor temperaturkonditionierte Vorformling zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE 43 40 291 A1 erläutert. Der grundsätzliche Aufbau einer Blasstation ist in der DE 42 12 583 A1 beschrieben. Möglichkeiten der Temperierung der Vorformlinge sind in der DE 23 52 926 A1 erläutert. Unter Temperierung oder thermischer Konditionierung wird dabei verstanden, dass der Vorformling auf eine für die Blasumformung geeignete Temperatur erwärmt und dem Vorformling ggf. ein Temperaturprofil aufgeprägt wird. Die Blasformung von Behältern aus Vorformlingen unter zusätzlicher Verwendung einer Reckstange ist ebenfalls bekannt. Die EP 2 335 903 A1 zeigt eine Blasmaschine, bei der unter Verwendung eines Druckgases und unterstützt durch eine Reckstange eine mehrstufige Umformung von Vorformlingen in Behälter erfolgt. Die DE 2010/0203187 A1 betrifft ebenfalls Blasmaschinen.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammenzufassen, wobei weiterhin das Blasformen und das Füllen an gesonderten Maschinenkomponenten und zeitlich nacheinander erfolgen. Einen solchen Stand der Technik zeigt die DE 10 2012 108 978 A1

Es wurde weiterhin bereits vorgeschlagen, Behälter, insbesondere auch in Form von Flaschen, aus thermisch konditionierten bzw. temperierten Vorformlingen herzustellen und dabei gleichzeitig mit einem flüssigen Füllgut zu befüllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter umgeformt wird. Derartige Verfahren, bei denen ein gleichzeitiges Formen und Füllen des jeweiligen Behälters erfolgt, können auch als hydraulische Umformverfahren oder als hydraulische Behälterformung bezeichnet werden. Auch hier ist es bekannt, diese Umformung durch den Einsatz einer Reckstange zu unterstützen. Auch hier wird der Vorformling vor dem Form- und Füllvorgang zunächst temperaturkonditioniert.

Bei einem Formen der Behälter aus den Vorformlingen durch das Füllgut selbst, d.h. unter Verwendung des Füllgutes als hydraulisches Druckmedium, wird für das Formen und Füllen der Behälter nur noch eine Maschine benötigt, die dafür allerdings eine erhöhte Komplexität aufweist. Ein Beispiel für eine solche Maschine zeigt die US 7,914,726 B2. Ein weiteres Beispiel zeigt die DE 2010 007 541 A1. Auch die US 2016/0250798 A1, die US 2014/0196415 A1 und die US 2014/154659 A1 zeigen Maschinem und Verfahren für das gleichzeitige Formen und Füllen eines Behälters aus Vorformlingen.

Das gleichzeitige Formen und Füllen eines Behälters aus einem Vorformling erfolgt in einer Umformstation, die unter anderem eine mehrteilig ausgebildete Form aufweist. Die Mehrteiligkeit der Form ist erforderlich, um einen Vorformling in die Form einsetzen zu können und nach Abschluss des Form- und Füllprozesses den fertig ausgeformten und gefüllten Behälter aus der Form entnehmen zu können. Die mehrteilig ausgebildete Form ist dabei so in der Umformstation angeordnet und ausgebildet, dass die Form einen geschlossenen Zustand und einen geöffneten Zustand einnehmen kann. Im geschlossenen Zustand umschließt die mehrteilige Form einen Innenraum und in diesem geschlossenen Zustand bildet die mehrteilige Form eine geschlossene Forminnenwand, gegen die der Vorformling bei geschlossener Form expandiert wird durch Zuführung des flüssigen Füllgutes unter einem Druck in den Vorformling und in die aus dem Vorformling entstehende Behälterblase bis zum Erreichen der endgültigen Behälterform, wobei dieser Umformungsprozess aus dem Vorformling in den Behälter bevorzugt mindestens zeitweilig durch eine Reckstange unterstützt wird, indem diese Reckstange in den Vorformling eingefahren wird gegen den geschlossenen Vorformlingsboden und die Reckstange den Vorformling in Achsrichtung reckt und die Expansion zumindest zeitweilig führt. Weiterhin ist es üblich, dass die Umformstationen sich wiederholend, z.B. periodisch mit der Umlaufperiodizität eines Arbeitsrades, auf dem die Umformstation angeordnet ist, mit einem Vorformling beschickt und anschließend fertig umgeformte Behälter aus der Form entnommen werden. Bekannt sind zum Beispiel taktweise arbeitende Maschinen mit mehreren Umformstationen oder auch nach dem Rundläuferprinzip arbeitende Maschinen mit kontinuierlich umlaufenden Arbeitsrädern, auf denen umfangsbeabstandet und in radialem Abstand zu einer Umlaufachse des Arbeitsrades mehrere Umformstationen angeordnet sind.

Gegenüber den Herstellungsverfahren und gegenüber den Vorrichtungen bei der Blasformung von Vorformlingen zu Behältern unter Verwendung eines Druckgases ergeben sich bei der Umformung von Vorformlingen in Behälter bei gleichzeitiger Befüllung durch Verwendung des Füllgutes als flüssiges Druckmedium Besonderheiten und Probleme, die bisher noch nicht sämtlich zufriedenstellend gelöst sind. Die vorliegende Erfindung betrifft eine solche Besonderheit und ein solches Problem.

Die vorliegende Erfindung betrifft nämlich das Problem, dass bei der Zuführung des Füllgutes als flüssiges Druckmedium in den Vorformling und in die sich daraus entwickelnde Behälterblase Füllgut in die mehrteilige Form gelangen kann, zum Beispiel durch Leckage zwischen einer Form- und Fülldüse und dem Vorformling, durch austretendes oder überschäumendes Füllgut bei Druckentlastung des gefüllten Behälters, bei Abheben der Form- und Fülldüse, beim Herausfahren der Reckstange aus dem Behälter, durch platzende Vorformlinge, Behälterblasen oder Behälter während des Form- und Füllvorganges. Es kann sich also Füllgut an der mehrteilig ausgeführten Form niederschlagen, nämlich an der Forminnenfläche. Insbesondere können sich erhebliche Füllgutmengen in der im Regelfall kelchförmig ausgebildeten Bodenform ansammeln. Solche Füllgutanhaftungen und solche Füllgutansammlungen führen zu einer abnehmenden und als ungenügend angesehenen Flaschenqualität, da einerseits dieses unerwünschte Füllgut zu lokaler Abkühlung der Form und der sich anlegenden Behälterblase führt und andererseits dieses unerwünschte Füllgut das Anlegen der sich entwickelnden Behälterblase an die Forminnenwand stört bzw. verhindert, weil es nicht verdrängt werden kann.

Es sind im Stand der Technik zu diesem Problem bisher keine Lösungen vorhanden und der Stand der Technik beschreibt bisher dieses Problem auch nicht, weil dieses Problem spezifisch für den simultan ausgeführten Form- und Füllprozess von Behältern aus Vorformlingen ist.

Der vorliegenden Erfindung liegt daher die Aufgabe zu Grunde, ein Verfahren, eine Vorrichtung, ein Arbeitsrad und Umformstationen für die Herstellung von gefüllten Behältern aus temperaturkonditionierten Vorformlingen bereitzustellen, die bei weiterhin hohen Form- und Füllgeschwindigkeiten das zuvor geschilderte Problem lösen.

Diese Aufgabe wird gelöst durch ein Verfahren mit den Merkmalen des Anspruchs 1. Diese Aufgabe wird weiterhin gelöst durch eine Vorrichtung nach Anspruch 16, durch ein Arbeitsrad nach Anspruch 15 und durch eine Umformstation nach Anspruch 8. Vorteilhafte Ausgestaltungen zum Verfahren, zu den Umformstationen, zur Vorrichtung und zum Arbeitsrad sind in den Unteransprüchen angegeben.

Die durch das erfindungsgemäße Verfahren und die durch die erfindungsgemäße Umformstation vorgeschlagenen Lösungen sehen vor, dass zwischen zeitlich aufeinanderfolgenden Beschickungsvorgängen mit Vorformlingen wenigstens zeitweise ein Verfahrensschritt des Entfernens von Flüssigkeit aus der mehrteilig ausgebildeten Form ausgeführt wird. Die Umformstation weist dazu eine Flüssigkeitsbeseitigungseinrichtung auf zur Beseitigung von Flüssigkeit aus der Form zwischen zeitlich aufeinanderfolgenden Beschickungsereignissen mit Vorformlingen. Insbesondere ist erfindungsgemäß vorgesehen, dass der Verfahrensschritt des Entfernens von Flüssigkeit aus der Form beginnend mit der Überführung der Form aus dem geschlossenen in den geöffneten Zustand erfolgt. Grundsätzlich ist aber auch möglich, dass das Entfernen von Flüssigkeit kontinuierlich erfolgt und nicht nur in bestimmten Prozessphasen.

Es ist erfindungsgemäß möglich, dass der Verfahrensschritt des Entfernens von Flüssigkeit aus der Form in jedem Form- und Füllprozesszyklus ausgeführt wird, um zuverlässig Flüssigkeit aus der Form entfernen zu können. Dies macht zum Beispiel die sensorische Erfassung von in der Form angehafteter oder angesammelter Flüssigkeit entbehrlich und dies macht auch entbehrlich, zum Beispiel das Platzen von Behältern sensorisch zu erfassen, wobei eine solche Erfassung selbst bei Ausführen des Entfernens von Flüssigkeit in jedem Form- und Füllprozesszyklus vorgesehen sein kann. Ein Platzen kann z.B. aus der Druckkurve des zugeführten Formfluides ermittelt werden anhand eines plötzlichen Druckabfalls. Es ist aber auch möglich, den Verfahrensschritt des Entfernens von Flüssigkeit nicht in jedem Umformungszyklus vorzusehen, sondern zum Beispiel nach einer vorbestimmten Zahl von Herstellungszyklen, gegebenenfalls ergänzt um die Ausführung des Verfahrensschritte des Entfernens von Flüssigkeit bei Auftreten eines Ereignisses, wie zum Beispiel das Platzen eines Behälters in der Form. Es ist auch möglich, dass der Verfahrensschritt des Entfernens von Flüssigkeit mehrere Arbeitsradumläufe andauert. Bei einem Platzen eines Behälters kann es vorteilhaft sein, die betroffene Umformstation für mehrere Umläufe nicht neu mit Vorformlingen zu beschicken, sondern z.B. für mehrere Umläufe eines Arbeitsrades mit einem Trocknungsfluid zu beaufschlagen. Die vorstehenden Ausführungen zum Verfahren gelten in analoger Weise für die Flüssigkeitsbeseitigungseinrichtung der erfindungsgemäßen Umformstation.

Es ist weiterhin vorgesehen, dass die mehrteilig ausgebildete Form eine Bodenform und wenigstens zwei Seitenformhälften aufweist. Dieser Formaufbau ist grundsätzlich bereits aus dem Bereich der Blasformmaschinen bekannt. Die Bodenform und die Seitenformhälften sind beweglich zueinander angeordnet und in einen geschlossenen Zustand und in einen geöffneten Zustand überführbar. Im geschlossenen Zustand grenzen diese Elemente der mehrteiligen Form an Trennlinien aneinander. Weiterhin ist bevorzugt, dass die Bodenform in vertikaler Richtung unterhalb der Seitenformhälften angeordnet wird, sodass im Ergebnis Behälter hergestellt werden, bei denen der geschlossene Boden in vertikaler Richtung unten angeordnet ist und die Behälteröffnung oben. Dies führt gleichzeitig dazu, dass eine Tendenz besteht, dass sich in der Bodenform Füllgutrückstände ansammeln können.

Mit Vorteil ist vorgesehen, dass die Bodenform beim Überführen in ihren geöffneten Zustand eine Kippbewegung ausführt. Die Kippbewegung kann auch von der Öffnungsbewegung entkoppelt erfolgen und z.B. nur bedarfsweise ausgeführt werden. Mit der Ausführung einer Kippbewegung ist gemeint, dass die Bodenform im geschlossenen Zustand in einer bestimmten Richtung ausgerichtet ist. Beim Öffnen der Form bzw. bis zum Erreichen des geöffneten Zustandes oder bei Erreichen des geöffneten Zustandes wird die Bodenform in eine davon abweichende Richtung verkippt. Dies ist insbesondere von Vorteil bei Vorrichtungen und Verfahren, die nach dem Rundläuferprinzip funktionieren. Die Kippbewegung sollte dann nach radial außen erfolgen und die Zentrifugalkraft unterstützt das Ausschütten von Füllgut aus der Bodenform.

Als Kippwinkel sollte ein Winkel von kleiner 90°, bevorzugt von kleiner 45° gewählt werden.

Weiter bevorzugt ist bei allen vorstehend genannten Varianten, dass das Ausführen der Kippbewegung zeitlich an das Öffnen der Form gekoppelt wird. Die vorstehend genannte Kippbewegung der Bodenform könnte durch einen entsprechenden Kippantrieb der Umformstation ausgeführt werden, wobei allerdings für alle vorstehend genannten Varianten als vorteilhaft angesehen wird, wenn der Antrieb für die Kippbewegung mechanisch an den Antrieb für das Öffnen der Form gekoppelt wird, insbesondere an den Antrieb, der die Bodenform aus der geschlossenen Position in die geöffnete Position verfährt. Auf diese Weise wird ein zusätzlicher Antrieb vermieden, die Öffnungsbewegung der Bodenform und die Kippbewegung wären automatisch zeitlich koordiniert und vorhandene Formen ließen sich mechanisch so umrüsten, dass eine Kippbewegung der Bodenform realisierbar ist.

Es könnten alle Bewegungen der Form bewegungsgekoppelt ausgeführt werden, also das Öffnen und Schließen der Seitenformen, der Bodenform und die Kippbewegung. Die Bewegung der Bodenform kann aber auch entkoppelt von der Bewegung der Seitenformen erfolgen. Ein Vorteil einer entkoppelten Kippbewegung der Bodenform durch einen eigenen Antrieb wäre z.B., dass die beiden Seitenformhälften z.B. in den geschlossenen Zustand bringbar wären, während z.B. die Bodenform mit Trocknungsfluid angeblasen wird. Die Innenflächen der Formhälften wären dadurch gegen Verschmutzung durch verspritzendes Füllgut geschützt. Der Antrieb könnte z.B. als mit einer Steuerkurve wechselwirkender Mitnehmer ausgeführt sein.

Die vorstehend erläuterte Erfindung kann insbesondere mit Vorteil eingesetzt werden bei Verfahren, die mit einem kontinuierlich umlaufend angetriebenen Arbeitsrad ausgeführt werden. Auf diesem Arbeitsrad werden mehrere Umformstationen mit einer mehrteilig ausgebildeten Form umfangsbeabstandet und in radialem Abstand zu einer Umlaufachse angeordnet. Solche nach dem Rundläuferprinzip ausgeführte Verfahren erlauben eine besonders hohe Form- und Füllgeschwindigkeit.

Die Ausbildung der Flüssigkeitsbeseitigungseinrichtung und die Ausführung des Verfahrensschrittes des Entfernens von Flüssigkeit erlauben viele zusätzliche Möglichkeiten, von denen nachfolgend einige erläutert werden. Es ist möglich und vorteilhaft, dass die nachfolgend erläuterten Möglichkeiten miteinander kombiniert realisiert werden.

Vorteilhaft ließe sich der Verfahrensschritt des Entfernens von Flüssigkeit dadurch weiter verbessern, dass die Aufteilung der mehrteilig ausgebildeten Form in eine Bodenform und in Seitenformen so erfolgt, dass die Trennlinie zwischen der Bodenform und den Seitenformen wenigstens bereichsweise die in vertikaler Richtung am tiefsten liegenden Punkte der Bodenform umfassen. Mit anderen Worten ausgedrückt bedeutet dies, dass die Bodenform wenigstens einen ihrer in vertikaler Richtung tiefsten Punkte auf der Trennlinie aufweist. Dadurch ist gewährleistet, dass bei Öffnen der Form etwaig im Bodenbereich der Form angesammeltes Füllgut automatisch abfließt, weil an den in vertikaler Richtung am tiefsten liegenden Punkten der Bodenform eventuell vorhandenes Füllgut abfließen muss. Je nach Kontur des herzustellenden Behälters im Bodenbereich sind hier sehr unterschiedliche Varianten möglich. Im Falle zum Beispiel eines Champagnerbodens könnte die Bodenform ein stempelförmiges Aussehen erhalten mit einem pilzkopfähnlichen Aussehen. Falls der Behälterboden mehrere Standfüße im Bodenbereich aufweisen soll, wie dies zum Beispiel bei Pentaloid-Böden bekannt ist, sollten zum Beispiel die tiefsten Punkte eines, bevorzugt sogar aller Behälterfüße auf der Trennlinie zwischen der Bodenform und den Seitenformen liegen. Auf diese Weise wird verhindert, dass die Bodenform insgesamt oder in Teilbereichen konvex geformte, wannenförmige Ansammelbereiche für Füllgut aufweist.

Bei der wie vorstehend erläuterten Aufteilung der mehrteiligen Form ergeben sich insbesondere dann Vorteile, wenn das Verfahren nach dem Rundläuferprinzip ausgeführt wird und wenn die tiefsten Punkte möglichst weit radial außen liegen. Aufgrund der Zentrifugalkraft wird Füllgut automatisch in radialer Richtung nach außen gedrängt und von der Bodenform entfernt.

In Alternative dazu oder gegebenenfalls ergänzend dazu kann auch vorgesehen sein, dass in der Bodenform der mehrteilig ausgebildeten Form an den tiefstliegenden Punkten Flüssigkeitsabführeinrichtungen vorgesehen sind. Alternativ oder zusätzlich kann in lokalen Minima, also in konvex geformten Teilbereichen, die wannenartige Ansammelbereiche für Füllgut darstellen, eine solche Flüssigkeitsabführeinrichtung vorgesehen sein. Es kann sich dabei zum Beispiel um Ablauföffnungen handeln, die zum Beispiel mit einem Ventil ausgestattet sind, zum Beispiel mit einem selbstschließenden Ventil, oder die mit einem porösen Einsatz ausgestattet sind, wobei dieser Einsatz das Abfließen von Füllgut erlauben aber die unschöne Ausbildung von Einprägungen im Behälterboden verhindern soll. Die vorstehend beschriebenen Ablauföffnungen könnten zum Beispiel an eine Absaugeinrichtung angeschlossen sein, um das Abführen von Flüssigkeit zu beschleunigen. Die genannten Flüssigkeitsabführeinrichtungen können kontinuierlich flüssigkeitsabführend oder auch intermittierend arbeitend ausgebildet sein. Mit diesen vorstehend beschriebenen Flüssigkeitsabführeinrichtungen könnten zum Beispiel im Stand der Technik bekannte Bodenformen modifiziert werden, ohne dass die bisher im Stand der Technik bekannte Aufteilung in eine becherförmig ausgeführte Bodenform und in Seitenformen geändert werden müsste.

Zu der vorstehend erläuterten Kippbewegung der Bodenform ist für alle genannten Realisierungsvarianten und für alle Kombinationen von Vorteil, wenn die Bodenform kippbeweglich an einem Kipplager gehaltert ist, das in vertikaler Richtung beabstandet unterhalb der Seitenformhälften angeordnet ist. Es ist weiterhin bevorzugt, dass die Kippbewegung kurvengesteuert ausgeführt wird.

Weiterhin bevorzugt ist, dass eine Trocknungseinrichtung vorgesehen ist. Diese Trocknungseinrichtung soll die geöffnete Form, insbesondere die geöffnete Bodenform, wenigstens zeitweise trocknen durch Beaufschlagung mit einem gasförmigen Trocknungsfluid und/oder durch Beaufschlagung mit Wärmeenergie. Diese Trocknungseinrichtung könnte zum Beispiel Druckluft, Abluft aus dem Ofen, Sterilluft oder Wärmestrahlung auf die geöffnete Form, insbesondere auf die Bodenform abgeben, um zusätzlich zu dem Verfahrensschritt des Entfernens von Flüssigkeit Restflüssigkeit zu entfernen und die Forminnenwand möglichst rückstandslos von Füllgut zu befreien.

Mit Vorteil ist dabei vorgesehen, dass die Form, insbesondere die Bodenform, auf ihrer Forminnenwand wenigstens bereichsweise mit einer hydrophoben Oberfläche und/oder mit einer die Anhaftung von Flüssigkeit vermindernden nanostrukturierten Oberfläche zur Erzeugung des Lotoseffektes ausgeführt ist. Dies erleichtert und begünstigt die Beseitigung von Flüssigkeiten, weil diese weniger stark an der Forminnenwand anhaften und daher vollständiger und in kürzerer Zeit entfernt werden können, unabhängig von der Art und Weise, wie dieses Entfernen der Flüssigkeit erfolgt. Eine Oberfläche ist dann als eine hydrophobe Oberfläche zu bezeichnen, wenn der Kontaktwinkel zwischen einer Flüssigkeit und einer Oberfläche groß ist. Als Kontaktwinkel (auch Rand- oder Benetzungswinkel) wird der Winkel bezeichnet, den ein Flüssigkeitstropfen auf der Oberfläche eines Feststoffs zu dieser Oberfläche bildet. Im Spezialfall der Verwendung von Wasser als Flüssigkeit bezeichnet man bei Kontaktwinkeln von etwa 90° oder mehr die Oberfläche als hydrophob. Bei sehr hohen Winkeln (ca. 160°) spricht man auch vom Lotoseffekt. Vorliegend geht es um die Formung von Behältern durch ein Füllgut, z.B. durch Getränke. Diese Getränke werden wasserähnliche Eigenschaften haben. Mit Vorteil ist die Oberfläche also so gewählt, dass der Kontaktwinkel mindestens 90° beträgt, bevorzugt mindestens 135°, weiter bevorzugt mindestens 160°, jeweils bezogen auf Wasser als Flüssigkeit.

Weitere Vorteile, Merkmale und Details der Erfindung ergeben sich aus den im Folgenden beschriebenen Ausführungsbeispielen unter Bezugnahme auf schematische Zeichnungen. Es zeigen:
- Fig. 1: eine stark schematisierte Darstellung einer Formfüllvorrichtung,
- Fig. 2: eine schematisierte Darstellung von mehreren, auf einem umlaufend angetriebenen Arbeitsrad angeordneten Umformstationen,
- Fig. 3a, 3b: eine perspektivische Ansicht und eine Schnittansicht durch eine Umformstation nach einem Ausführungsbeispiel,
- Fig. 4a, 4b: eine perspektivische Ansicht und eine Schnittdarstellung zu dem in den Fig. 3a, 3b gezeigten Ausführungsbeispiel zu einem späteren Prozesszeitpunkt,
- Fig. 5: ein weiteres Ausführungsbeispiel in einer teilweisen Schnittansicht einer Bodenform mit einer Einrichtung zur Beseitigung von Flüssigkeit bzw. Füllgut, und
- Fig. 6: eine Darstellung gemäß Fig. 5 zu einem weiteren Ausführungsbeispiel in einer teilweisen Schnittansicht einer Bodenform mit einer Einrichtung zur Beseitigung von Flüssigkeit bzw. Füllgut.

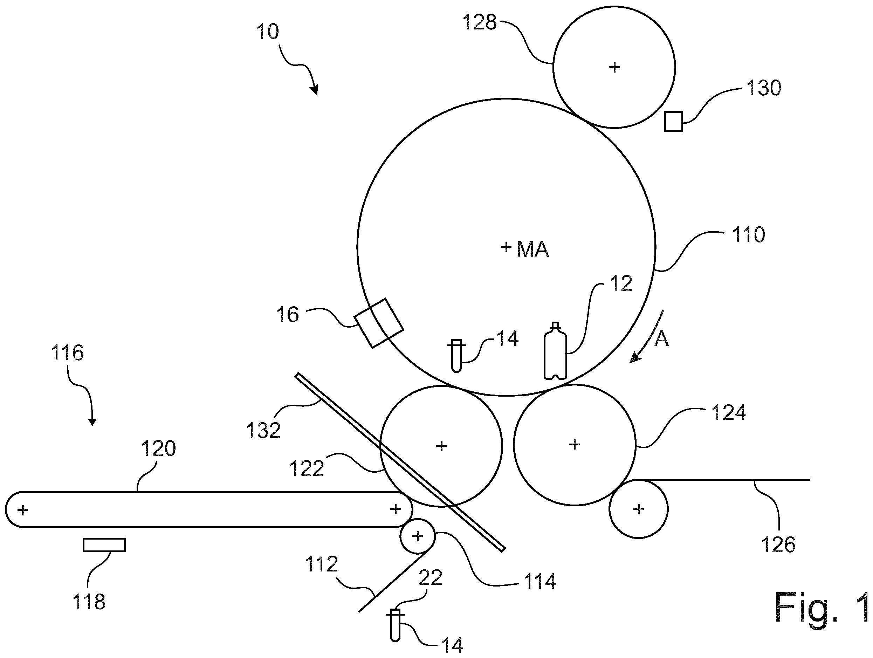

Der prinzipiell aus dem Stand der Technik bekannte Aufbau einer kombinierten Form- und Füllmaschine 10 ist in Figur 1 dargestellt. Die Darstellung zeigt die bevorzugte Ausbildung einer solchen Form- und Füllmaschine 10 in der Art einer Rotationsmaschine mit einem mehrere Umformstationen 16 tragenden, rotierenden Arbeitsrad 110. Von einer Zuführeinrichtung 112 werden schematisch dargestellte Vorformlinge 14, die auch als Preforms bezeichnet werden, unter Verwendung eines Übergaberades 114 kontinuierlich einer Heizeinrichtung 116 zugeführt. Im Bereich der Heizeinrichtung 116, in der die Vorformlinge 14 entlang einer Heizstrecke transportiert und dabei thermisch konditioniert werden, können die Vorformlinge 14 anwendungsabhängig beispielsweise mit ihren Mündungsabschnitten 22 in lotrechter Richtung nach oben oder in lotrechter Richtung nach unten transportiert werden. Die Heizeinrichtung 116 ist beispielsweise mit Heizelementen 118 ausgestattet, die entlang einer Transporteinrichtung 120 zur Ausbildung der Heizstrecke angeordnet sind. Als Transporteinrichtung 120 kann beispielsweise eine umlaufende Kette mit Transportdornen zur Halterung der Vorformlinge 14 verwendet werden. Als Heizelemente 118 eignen sich beispielsweise IR-Strahler oder Licht emittierende Dioden oder NIR-Strahler. Da solche Heizeinrichtungen in vielfältiger Art im Stand der Technik bekannt sind und die konstruktiven Einzelheiten der Heizeinrichtung für die vorliegende Erfindung nicht wesentlich sind, kann auf eine detailliertere Beschreibung verzichtet und auf den Stand der Technik verwiesen werden, insbesondere auf den Stand der Technik zu Heizeinrichtungen von Blas- und von Streckblasmaschinen.

Nach einer ausreichenden Temperaturkonditionierung werden die Vorformlinge 14 von einem Übergaberad 122 zu einem rotationsfähig angeordneten, d.h. um eine vertikale Maschinenachse MA umlaufend antreibbaren Arbeitsrad 110 bzw. an Umformstationen 16 übergeben, die an dem Arbeitsrad 110 umfangsverteilt angeordnet sind. Das Arbeitsrad 110 ist mit einer Mehrzahl solcher Umformstationen 16 ausgestattet, in deren Bereich sowohl eine Umformung der Vorformlinge 14 in die schematisch dargestellten Behälter 12 als auch eine Befüllung der Behälter 12 mit dem vorgesehenen Füllgut erfolgt. Das Formen jedes Behälters 12 erfolgt hierbei zeitgleich mit der Befüllung, wobei das Füllgut als Druckmedium beim Formen dient. Zur zeichnerischen Vereinfachung zeigt Figur 1 nur eine solche Umformstation 16.

Nach dem Formen und Füllen werden die fertig geformten und gefüllten Behälter 12 von einem Entnahmerad 124 vom Arbeitsrad 110 entnommen, weitertransportiert und einer Ausgabestrecke 126 zugeführt. Das Arbeitsrad 110 läuft im Produktionsbetrieb kontinuierlich mit einer gewünschten Umlaufgeschwindigkeit um. Während eines Umlaufs erfolgt das Einsetzen eines Vorformlings 14 in eine Umformstation 16, die Expansion des Vorformlings 14 zu einem Behälter 12 inklusive Füllung mit einem Füllgut und ggf. inkl. Reckung, falls eine Reckstange vorgesehen ist, und die Entnahme des Behälters 12 aus der Umformstation 16.

Gemäß der Ausführungsform in Figur 1 ist weiterhin vorgesehen, dem Arbeitsrad 110 über eine Eingabeeinrichtung 128 schematisch dargestellte Verschlusskappen 130 zuzuführen. Hierdurch ist es möglich, auf dem Arbeitsrad 110 auch bereits ein Verschließen der Behälter 12 durchzuführen und unter Verwendung des Entnahmerades 124 fertig geformte, gefüllte und verschlossene Behälter 12 zu handhaben.

Als Material für die Vorformlinge 14 können unterschiedliche thermoplastische Materialien verwendet werden. Beispielhaft seien Polyethylenterephthalat (PET), Polyethylen (PE), Polyethylennaphthalat (PEN) oder Polypropylen (PP) genannt. Die Dimensionierung sowie das Gewicht der Vorformlinge 14 sind an die Größe, das Gewicht und/oder an die Gestaltung der herzustellenden Behälter 12 angepasst.

Im Bereich der Heizeinrichtung 116 sind typischerweise eine Vielzahl von elektrischen und elektronischen Bauteilen angeordnet. Darüber hinaus sind die Heizelemente 118 mit feuchtigkeitsempfindlichen Reflektoren versehen. Da im Bereich des Arbeitsrades 110 unter Verwendung des flüssigen Füllgutes eine Befüllung und Formung der Behälter 12 erfolgt, sollte bevorzugt zur Vermeidung elektrischer Probleme dafür gesorgt werden, dass ein unbeabsichtigter Eintrag von Feuchtigkeit in den Bereich der Heizeinrichtung 116 vermieden wird. Dies kann beispielsweise durch eine Abschotteinrichtung 132 erfolgen, die zumindest einen Spritzschutz bietet. Darüber hinaus ist es auch möglich, im Bereich des Übergaberades 122 verwendete Transportelemente für die Vorformlinge 14 geeignet zu temperieren oder mit Druckgasstößen derart zu beaufschlagen, dass anhaftende Feuchtigkeit nicht in den Bereich der Heizeinrichtung 116 gelangen kann.

Eine Handhabung der Vorformlinge 14 und/oder der Behälter 12 erfolgt vorzugsweise unter Verwendung von Zangen und/oder den Mündungsabschnitt 22 wenigstens bereichsweise von innen oder von außen mit einer Haltekraft beaufschlagenden Klemm- oder Steckdornen. Solche Handhabungsmittel sind ebenfalls aus dem Stand der Technik hinlänglich bekannt.

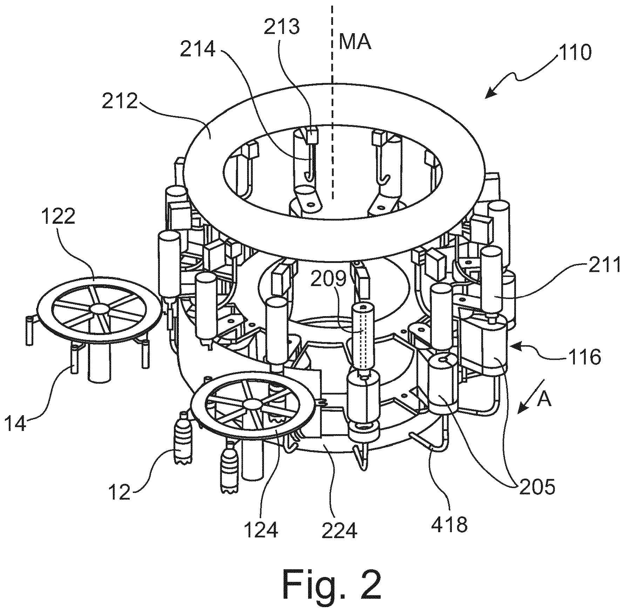

Fig. 2 zeigt in schematischer Ansicht etwas detaillierter das in Fig. 1 mit Bezugszeichen 110 bezeichnete Arbeitsrad mit mehreren umfangsverteilt daran angeordneten und mit dem Arbeitsrad umlaufenden Umformstationen 116. Das Arbeitsrad 110 läuft drehangetrieben um die Arbeitsradachse MA um in Richtung des Pfeiles A, also im Uhrzeigersinn. Bevorzugt ist der radiale Abstand und der Umfangsabstand zwischen benachbarten Stationen für alle Stationen gleich gewählt, um einen ruhigen Umlauf zu gewährleisten.

Jede Umformstation 116 weist eine Form 205 auf, die im dargestellten Ausführungsbeispiel aus einer Bodenform 208 und zwei Seitenformen 206, 207 zusammengesetzt ist. Oberhalb der Form 205 ist zu jeder Station ein Form- und Füllkopf 211 angeordnet. Zur Durchführung des Form- und Füllvorganges wird zum Beispiel der Form- und Füllkopf 211 auf die geschlossene Form 205 abgesenkt und in dichtende Anlage zu einem in der geschlossenen Form 205 aufgenommenen Vorformling 14 gebracht. Grundsätzlich ist der Aufbau eines solchen Arbeitsrades 110 mit mehreren damit umlaufenden Umformstationen 116 aber aus dem Stand der Technik bekannt und bedarf keiner tiefergehenden Beschreibung.

In der Regel weist jede Umformstation 116 auch eine Reckstange 209 auf, die in vertikaler Richtung, d.h. in Längsrichtung des Vorformlings 14, axial verschiebbar vorgesehen ist, und die mit ihrem unteren abgerundeten Ende während des Form- und Füllprozesses zumindest zeitweise zunächst gegen den geschlossenen Boden des umzuformenden Vorformlings 14 und dann gegen den Boden des sich entwickelnden Behälters 12 anliegend gesteuert nach unten bewegt wird und damit das Verformen bzw. Recken des Vorformlings 14 in den jeweiligen Behälter 12 führt. Auch das Einleiten des flüssigen Füllgutes in den Vorformling 14 bzw. in die sich zunehmend entwickelnde Behälterblase kann über die Reckstange 209 erfolgen, z.B. über einen Zuströmkanal, der im Inneren der Reckstange 209 ausgebildet ist und über bodenseitige Öffnungen verfügt.

Am Arbeitsrad 110 ist ein Ringkessel 212 vorgesehen, der während des Form- und Füllbetriebes des Arbeitsrades 110 mit dem unter dem Form- und Fülldruck stehenden Füllgut zumindest teilgefüllt ist und über Ventile 213 aufweisende Leitungen 214 mit den Form- und Füllköpfen 207 verbunden ist. Unterhalb der Form- und Füllstationen 116 ist am Arbeitsrad 110 eine Ringleitung 224 angeordnet, die unter anderem als Sammelleitung oder Sammelbehälter zum Sammeln von Füllgutresten dient, die aus den Umformstationen 116 abzuführen sind. Dies wird als bevorzugt angesehen gegenüber einer Lösung, bei der dieses Füllgut ungehindert zu Boden fallen kann, wobei die Sammelleitung gleichwohl rein optional vorgesehen ist.

Dem Arbeitsrad 110 werden Vorformlinge 14 über einen Transportstern 122 zugeführt, wobei jeder Umformstation 116 bei der dargestellten Ausführungsform ein Vorformling 14 übergeben wird. Die umgeformten und gefüllten Behälter 12 werden nach Abschluss des Form- und Füllprozesses und nach Öffnen der Formen 205 über einen Transportstern 124 entnommen.

Bedingt durch platzende Vorformlinge 14 bzw. platzende Behälterblasen bzw. platzende Behälter 12, weiter bedingt durch Leckagen im Füllgutweg, weiterhin bedingt durch an den Form- und Füllköpfen 207 anhaftende Füllgutreste und gegebenenfalls durch an der Reckstange 209 anhaftende Füllgutreste, die in die Form 205 abtropfen können, kann sich in diesen Formen 205 Füllgut ansammeln, das bei weiteren Form- und Füllprozessen störend wirkt. Aus diesem Grunde ist erfindungsgemäß vorgesehen, dass die Umformstationen 116 mit Einrichtungen versehen sind, um Füllgut zu entfernen. Verfahrenstechnisch ist insoweit vorgesehen, dass in einem Verfahrensschritt Füllgutreste abgeführt werden.

Nachfolgend sollen Ausführungsbeispiele zu solchen Einrichtungen für das Entfernen von Füllgut aus Formen 205 gezeigt werden, wobei diese Formen 205 nicht notwendigerweise auf einem Arbeitsrad 110 rotierend angeordnet sein müssen.

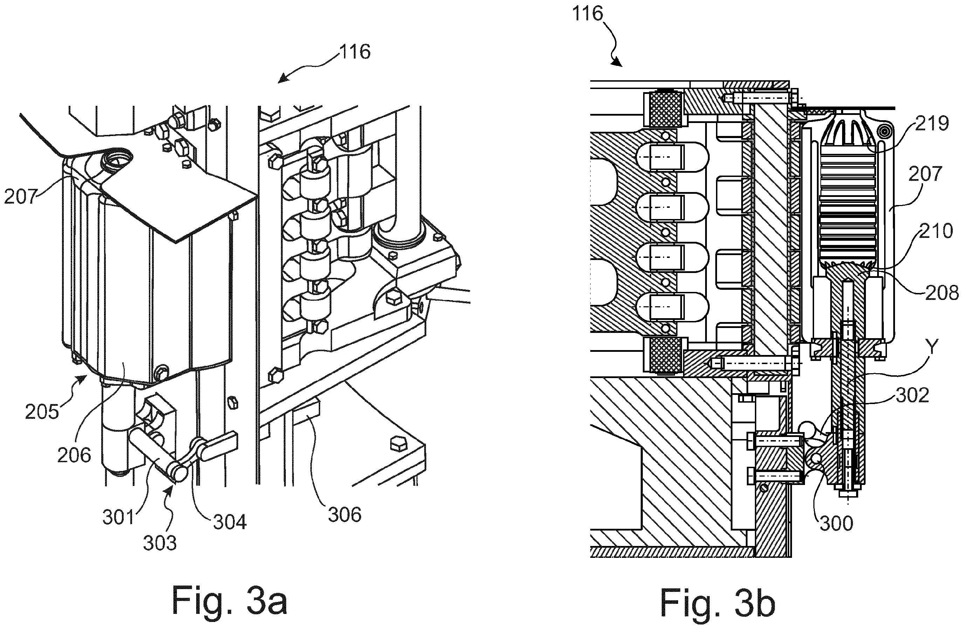

Fig. 3a zeigt in einer perspektivischen Ansicht ein Ausführungsbeispiel für eine Form 205 einer Umformstation 116. Weitere Einzelheiten sind in der Schnittansicht der Fig. 3b durch einen Teilbereich einer solchen Umformstation 116 erkennbar.

Die Form 205 ist wie auch bereits in Figur 2 angedeutet aus zwei Seitenformhälften 206 und 207 aufgebaut, die zusammen mit einer Bodenform 208 in einer in Fig. 3a und 3b gezeigten geschlossenen Stellung der Form ein Innenvolumen umschließen und zusammen eine Innenfläche 219 der Form 205 bilden. Der Schnitt der Fig. 3b erfolgte zentrisch durch die geschlossene Blasform 205 entlang der Verbindungsebene der beiden Seitenformhälften 207 und 206, sodass in der Darstellung der Fig. 3b in die Seitenformhälfte 207 hineingeblickt wird.

In dem dargestellten geschlossenen Zustand der Form 205 liegen die Bodenform 208 und die Seitenformhälften 207 und 206 eng aneinander an, wobei in der Fig. 3b die zwischen der Bodenform 208 und der Seitenformhälfte 207 definierte Trennlinie mit Bezugszeichen 210 versehen wurde. Im gezeigten Ausführungsbeispiel befindet sich diese Trennlinie 210 in vertikaler Richtung am tiefsten Bereich der Innenfläche 219 der Form 205, sodass bei Öffnen der Form 205 darin angesammeltes Füllgut automatisch aus der Form 205 austritt.

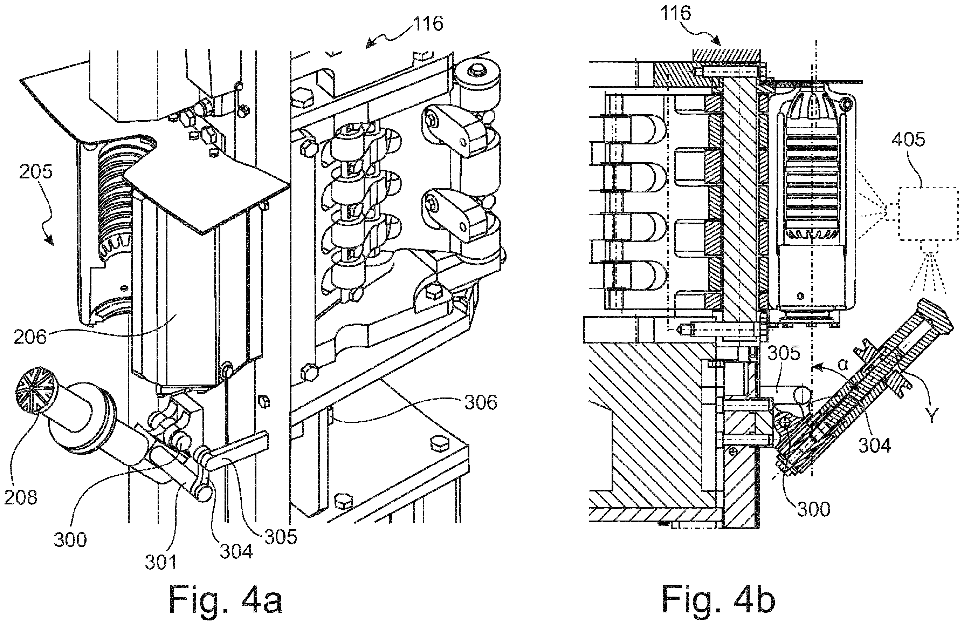

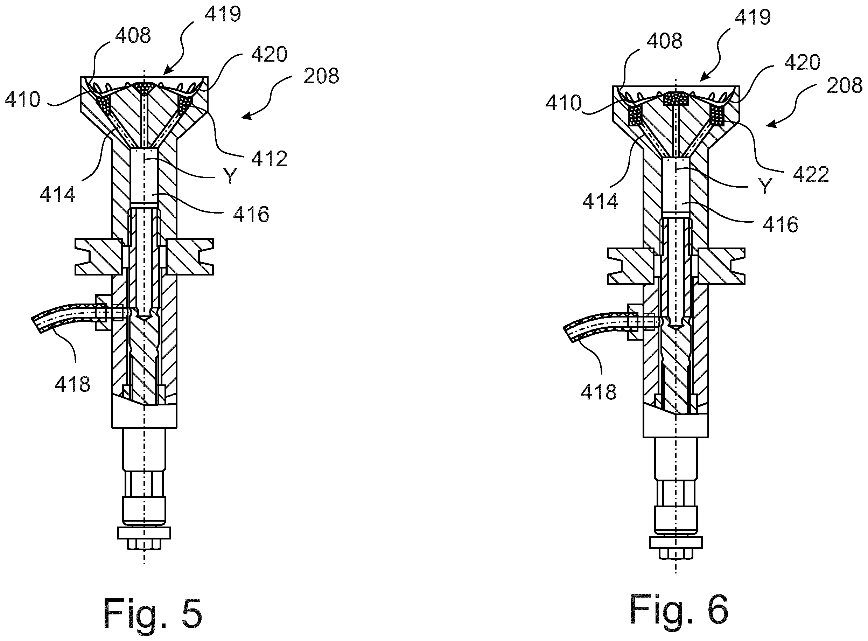

Die im rechten Bildbereich der Fig. 3a gezeigte Antriebskinematik der Seitenformhälften 206, 207 und der Bodenform 208 entspricht grundsätzlich einer bereits im Stand der Technik für die Anmelderin bekannten Konstruktion und bedarf keiner detaillierten Beschreibung. Stattdessen wird Bezug genommen auf Fig. 5 der DE 10 2004 045 405 und die zugehörige Beschreibung in den Abs. [0047]-[0052] der zugehörigen Offenlegungsschrift vom 13. April 2006. Weiterhin wird Bezug genommen auf die Fig. 5-8 der DE 10 2009 006 508 A1 und die zugehörige Beschreibung in den Absätzen [0056]-[0084] zur Bewegungskopplung zwischen einer Öffnungsbewegung einer Form mit einer Absenkbewegung einer Blasdüse, die vorliegend als Form- und Füllkopf ausgeführt ist. Es wird weiterhin Bezug genommen auf die Fig. 4a bis 4c, und 5a, 5b sowie die zugehörige Beschreibung in den Abs. [0051]-[0066] der EP 2 917 019 B1. Aus diesen zitierten Passagen, die hiermit zum Gegenstand der vorliegenden Beschreibung gemacht werden, entnimmt der Fachmann ausreichend Informationen, um ein Öffnen und Schließen der Form 205 vorzusehen.

Gegenüber diesen grundsätzlich im Stand der Technik bereits offenbarten Konstruktionen weist die in den Figuren 3a, 3b und 4a, 4b dargestellte Konstruktion als Unterscheidungsmerkmal auf, dass die Bodenform 208 in der in Fig. 4a und 4b gezeigten geöffneten Stellung gegenüber der in Fig. 3a und Fig. 3b gezeigten geschlossenen Stellung verkippt ist. Darunter ist zu verstehen, dass die Längsachse der Bodenform 208 um einen Winkel α verschoben ist bei Vergleich des geschlossenen Zustandes und des geöffneten Zustandes. Bei auf einem Arbeitsrad 110 angeordneter Umformstation 116 sollte dieses Verkippen radial nach außen erfolgen, sodass der vorhandene Zentrifugaleffekt besonders zum Tragen kommt. Konstruktiv ist das Verkippen der Bodenform 208 im gezeigten Ausführungsbeispiel dadurch realisiert, dass die Bodenform 208 an seinem den Seitenformhälften 206, 207 abgewandten Bereich an einer Schwenkachse 300 gelagert ist. Ein Schwenkbetätigungshebel 301 erstreckt sich quer zur Längsachse Y der Bodenform 208. An dessen freiem Ende 303 ist drehbar ein Übertragungshebel 304 angelenkt, der an seinem zweiten Ende 305 an einem Betätigungshebel 306 angelenkt ist. Dieser Betätigungshebel 306 ist wiederum zum Zwecke der Betätigung der Schwenkbewegung der Bodenform 208 in radialer Richtung des Arbeitsrades 110 verschieblich angeordnet. Die betätigende Verschiebung des Betätigungshebels 306 kann zum Beispiel in nicht dargestellter Weise durch einen Aktor oder kurvengesteuert oder in nicht dargestellter Weise durch mechanische Ankopplung an die an sich aus dem Stand der Technik bekannte Öffnungs- und Schließbewegung der Seitenformhälften 206, 207 erfolgen. Dieser Stand der Technik wurde im vorhergehenden Absatz genannt.

Im Ausführungsbeispiel der Fig. 3a, 3b, 4a und 4b ist sowohl eine Schwenkbarkeit der Bodenform vorgesehen als auch ein Ablauf des Füllgutes in Folge einer so gewählten Aufteilung der Form in eine Bodenform 208 und in Seitenformhälften 206, 207, dass die Trennlinie 210 dazwischen auf einem tiefstliegenden Punkt der Innenfläche 219 der Form 205 liegt. Beide Effekte können sich in günstiger Weise ergänzen.

In Fig. 4b ist in gestrichelter Darstellung prinzipienhaft eine Trocknungseinrichtung 405 eingezeichnet, die zum Beispiel auf die Bodenform 208 einwirken kann. Diese Trocknungseinrichtung 405 kann zusätzlich und/oder alternativ auch auf eine oder beide Seitenformhälften 206, 207 einwirken. In der allgemeinen Beschreibungseinleitung wurden unterschiedliche Trocknungseinrichtungen genannt, die schematisch dargestellte Trocknungseinrichtung 405 kann entsprechend ausgestaltet sein.

Fig. 5 zeigt eine Bodenform 208 in einer geschnittenen Darstellung. In den tiefstliegenden Bereichen der Innenkontur 408 der Bodenform 208 sind Auslauföffnungen 410 vorgesehen, die mit einem porösen Material 412 im unmittelbaren an die Innenkontur 408 angrenzendem Bereich abschließen. Das poröse Material 412 soll Füllgut hindurchtreten lassen, aber das Entstehen von störenden Abdrücken auf einer sich dort anlegenden Behälterwand vermeiden. Abführkanäle 414 erstrecken sich von diesem porösen Material 412 zu einer im Inneren der Blasform 208 ausgebildeten Sammelleitung 416, welche wiederum kommunizierend mit einer Absaugleitung 418 verbunden ist. Vorstehend weist die Bodenform 208 eine Innenkonturierung 408 für das Ausbilden eines Behälterbodens mit mehreren Füßen 420 auf. Bevorzugt ist im Bereich dieser Füße 420 jeweils eine Flüssigkeitsableitung 410 vorgesehen, die mit einem porösen Material 412 versehen ist.

Eine dazu alternative Konstruktionsvariante zeigt Fig. 6, wobei gegenüber Fig. 5 lediglich eine Änderung dadurch bedingt ist, dass kein poröses Material vorgesehen ist, sondern dass die Abführleitungen 410 mit einem Ventil 422 versehen sind.

Die Innenfläche 419 der Bodenform 208 kann zur Verbesserung des Ablaufens von Füllgut z.B. hydrophile Oberflächeneigenschaften aufweisen. Die Innenfläche 419 kann auch mit einer solchen Oberflächenstrukturierung ausgeführt sein, dass ein sogenannter Lotoseffekt eintritt, wodurch das das Anhaften von Flüssigkeit vermindert wird.

## Patentansprüche

1. Verfahren zur Herstellung von mit einem flüssigen Füllgut gefüllten Behältern (12) aus Vorformlingen (14) aus einem thermoplastischen Material, wobei der jeweilige Vorformling (14) thermisch konditioniert und anschließend während einer Umform- und Füllphase in einer mehrteilig ausgebildeten Form (205) einer Umformstation (16) mit wenigstens einem unter einem Druck in den Vorformling zugeführten flüssigen Füllgut als Druckmedium in den Behälter (12) umgeformt und gefüllt wird, wobei der Vorformling (14) während seiner Umformung in den Behälter (12) vorzugsweise mindestens zeitweilig durch eine Reckstange (209) geführt und in Achsrichtung gestreckt wird, wobei die Form (205) für ein sich wiederholendes Beschicken mit einem Vorformling (14) und für die anschließende Entnahme eines fertig umgeformten Behälters (12) aus einem geschlossenen Zustand in einen geöffneten Zustand überführbar ist, wobei die Umformung in den Behälter (12) bei geschlossener Form (205) gegen die Forminnenwand (219) erfolgt, wobei die Form (205) aus einer Bodenform (208) und aus wenigstens zwei Seitenformhälften (206, 207) ausgebildet ist, wobei die Bodenform (208) und die weiteren Formelemente (206, 207) beweglich zueinander angeordnet sind und im geschlossenen Zustand an Trennlinien (210) aneinandergrenzen, wobei die Bodenform (205) in vertikaler Richtung unterhalb der Seitenformen (206, 207) angeordnet wird, **dadurch gekennzeichnet, dass** zwischen zeitlich aufeinanderfolgenden Beschickungsvorgängen wenigstens zeitweise ein Verfahrensschritt des Entfernens von Flüssigkeit aus der Form (205) ausgeführt wird, indem die Bodenform (208) beim oder nach dem Überführen in ihren geöffneten Zustand eine Kippbewegung ausführt, insbesondere beginnend mit der Überführung der Form (205) aus dem geschlossenen in den geöffneten Zustand.

2. Verfahren nach Anspruch 1, **dadurch gekennzeichnet, dass** das Verfahren mit einem kontinuierlich umlaufend angetriebenen Arbeitsrad (110) ausgeführt wird, auf dem mehrere Umformstationen (16) mit jeweils einer mehrteilig ausgebildeten Form (205) umfangsbeabstandet und in radialem Abstand zu einer Umlaufachse (MA) angeordnet sind, wobei die Kippbewegung bevorzugt radial nach außen erfolgt.

3. Verfahren nach Anspruch 1 oder 2, **dadurch gekennzeichnet, dass** die Trennlinie (210) zwischen der Bodenform (208) und den Seitenformen (206, 207) so gewählt wird, dass wenigstens bereichsweise die in vertikaler Richtung am tiefsten liegenden Punkte der Bodenform (208) auf dieser Trennlinie (210) liegen.

4. Verfahren nach einem der Ansprüche 1 bis 3, **dadurch gekennzeichnet, dass** eine Flüssigkeitsabführeinrichtung (412, 422) in einem am tiefsten liegenden Bereich der Form (205) angeordnet wird und/oder in einem lokalen Minimum.

5. Verfahren nach einem der vorhergehenden Ansprüche, **dadurch gekennzeichnet, dass** die geöffnete Form (205), insbesondere die Bodenform (208), wenigstens zeitweise von einer Trocknungseinrichtung (405) mit einem gasförmigen Trocknungsfluid und/oder mit Wärmeenergie beaufschlagt wird.

6. Verfahren nach einem der vorhergehenden Ansprüche, **dadurch gekennzeichnet, dass** das Ausführen der Kippbewegung zeitlich an das Öffnen der Form gekoppelt ist, wobei bevorzugt der Antrieb für die Kippbewegung mechanisch an den Antrieb für das Öffnen der Form gekoppelt wird, insbesondere an den Antrieb, der die Bodenform aus der geschlossenen Position in die geöffnete Position verfährt.

7. Verfahren nach Anspruch 6, **dadurch gekennzeichnet, dass** alle Bewegungen der Form bewegungsgekoppelt ausgeführt werden, also das Öffnen und Schließen der Seitenformen, der Bodenform und die Kippbewegung der Bodenform.

8. Umformstation (16) zur Herstellung von mit einem flüssigen Füllgut gefüllten Behältern (12) aus Vorformlingen (14) aus einem thermoplastischen Material, wobei die Umformstation (16) einen Form- und Füllkopf (211) aufweist sowie eine mehrteilig ausgebildete Form (205), und wobei die Umformstation (16) ausgeführt ist, einen thermisch konditionierten Vorformling (14) während einer Umform- und Füllphase in der Form (205) mit einem unter einem Druck in den Vorformling zugeführten flüssigen Füllgut als Druckmedium in den Behälter (12) umzuformen und zu füllen, wobei die Umformstation (16) bevorzugt eine Reckstange (209) aufweist und ausgeführt ist, den Vorformling (14) während seiner Umformung in den Behälter (12) und während seiner Füllung mindestens zeitweilig durch die Reckstange (209) zu führen und in Achsrichtung zu recken, wobei die Form (205) für ein sich wiederholendes Beschicken mit einem Vorformling (14) und für die anschließende Entnahme eines fertig umgeformten Behälters (12) aus einem geschlossenen Zustand in einen geöffneten Zustand überführbar ist, wobei die Umformung in den Behälter (12) bei geschlossener Form (205) gegen die Forminnenwand (219) erfolgt, wobei die Form (205) aus einer Bodenform (208) und aus wenigstens zwei Seitenformhälften (206, 207) ausgebildet ist, wobei die Bodenform (208) und die Seitenformhälften (206, 207) beweglich zueinander angeordnet sind und im geschlossenen Zustand an Trennlinien (210) aneinandergrenzen, wobei die Bodenform (208) in vertikaler Richtung unterhalb der Seitenformen (206, 207) angeordnet ist, **dadurch gekennzeichnet, dass** die Umformstation (16) eine Flüssigkeitsbeseitigungseinrichtung (210, 412, 422, 300) aufweist zur Beseitigung von Flüssigkeit aus der Form (205) zwischen zeitlich aufeinanderfolgenden Beschickungen mit Vorformlingen (14), indem die Bodenform (208) zur Ausführung einer Kippbewegung beim oder nach dem Überführen in ihren geöffneten Zustand angeordnet und ausgebildet ist, insbesondere beginnend mit Überführung der Form (205) aus dem geschlossenen in den geöffneten Zustand,.

9. Umformstation (16) nach Anspruch 8, **dadurch gekennzeichnet, dass** die Trennlinie (210) zwischen der Bodenform (208) und den Seitenformen (206, 207) so gewählt ist, dass wenigstens bereichsweise die in vertikaler Richtung am tiefsten liegenden Punkte der Bodenform (208) auf dieser Trennlinie (210) liegen.

10. Umformstation (16) nach einem der Ansprüche 8 oder 9, **dadurch gekennzeichnet, dass** eine Flüssigkeitsabführeinrichtung (412, 422) in einem am tiefsten liegenden Bereich der Form (205) und/oder in einem lokalen Minimum angeordnet ist.

11. Umformstation (16) nach einem der Ansprüche 8 bis 10, **dadurch gekennzeichnet, dass** die Umformstation (16) eine Trocknungseinrichtung (405) aufweist, die angeordnet und eingerichtet ist für das wenigstens zeitweise Beaufschlagen der geöffneten Form (205), insbesondere der Bodenform (208), mit einem gasförmigen Trocknungsfluid und/oder mit Wärmeenergie.

12. Umformstation (16) nach einem der vorhergehenden Ansprüche, **dadurch gekennzeichnet, dass** die Form (205), insbesondere die Bodenform (208), auf ihrer Forminnenwand (219) wenigstens bereichsweise mit einer hydrophoben Oberfläche (419) und/oder mit einer die Anhaftung von Flüssigkeit vermindernden nanostrukturierten Oberfläche (419) zur Erzeugung des Lotoseffektes ausgeführt ist.

13. Umformstation (16) nach einem der Ansprüche 8 bis 12, **dadurch gekennzeichnet, dass** das Ausführen der Kippbewegung zeitlich an das Öffnen der Form gekoppelt ist, insbesondere indem der Antrieb für die Kippbewegung mechanisch an den Antrieb für das Öffnen der Form gekoppelt ist, insbesondere an den Antrieb, der die Bodenform aus der geschlossenen Position in die geöffnete Position verfährt.

14. Umformstation (16) nach Anspruch 13, **dadurch gekennzeichnet, dass** alle Bewegungen der Form bewegungsgekoppelt ausgeführt sind, also das Öffnen und Schließen der Seitenformen, der Bodenform und die Kippbewegung.

15. Arbeitsrad (110) mit mehreren Umformstationen (16) zur Herstellung von mit einem flüssigen Füllgut gefüllten Behältern (12) aus Vorformlingen (14) aus einem thermoplastischen Material, wobei das Arbeitsrad (110) kontinuierlich umlaufend angetrieben ausgeführt ist, wobei die Umformstationen (16) umfangsbeabstandet und in radialem Abstand zu einer Umlaufachse (MA) auf dem Arbeitsrad (110) angeordnet sind, **gekennzeichnet durch** wenigstens eine Umformstation (16) mit den Merkmalen nach einem der Ansprüche 8 bis 14.

16. Vorrichtung (10) zur Herstellung von mit einem flüssigen Füllgut gefüllten Behältern (12) aus Vorformlingen (14) aus einem thermoplastischen Material, mit einer Heizeinrichtung (116) zum Temperaturkonditionieren der Vorformlinge (14), mit wenigstens einer eine Form (205) aufweisenden Umformstation (16), **gekennzeichnet durch** eine Umformstation (16) gemäß einem der Ansprüche 8 bis 14 oder **durch** ein Arbeitsrad (110) gemäß Anspruch 15.

## Claims

1. Method for manufacturing containers filled with a liquid filling material (12) out of preforms (14) made of a thermoplastic material, wherein the respective preform (14) is thermally conditioned and then formed into the container (12) during a forming and filling phase in a multi-part mound (205) of a forming station (16), filling it with at least one liquid filling material as a pressure medium supplied to the preform under a pressure, wherein, while being formed into the container (12), the preform (14) is preferably at least intermittently guided through a draw bar (209) and is stretched in the axis direction, wherein the mould (205) is transferable from an closed state into an open state for iteratively loading it with a preform (14) and for subsequently removing a ready-formed container (12), wherein forming into the container (12) is carried out against the mould inner wall (219) with the mould closed (205), wherein the mould (205) consists of a mould base (208) and at least two lateral mould halves (206, 207), wherein the mould base (208) and the other moulding elements (206, 207) are movably arranged towards each other and border one another at dividing lines (210), wherein the mould base (205) is arranged in the vertical direction below the lateral moulds (206, 207), **characterized in that**, between successive loading operations, a method step of removing liquid from the mould (205) is at least intermittently carried out via the mould base (208) executing a tilting movement during or after transfer to its open state, in particular, starting with the transfer of the mould (205) from the closed to the open state.

2. Method according to Claim 1, **characterized in that** the method is carried out with a work wheel (110) propelled to continuously revolve, on which a plurality of forming stations (16) are arranged, each with a multi-part formed mould (205) circumferentially spaced away and at a radial distance to a circulating axis (MA), wherein the tilting movement preferably takes place radially outwards.

3. Method according to Claim 1 or 2, **characterized in that** the dividing line (210) between the mould base (208) and the lateral moulds (206, 207) is selected in such a way that, at least in sections, the lowest points of the mould base in the vertical direction (208) lie on this dividing line (210).

4. Method according to any one of Claims 1 to 3, **characterized in that** a liquid draining device (412, 422) is arranged at the deepest region of the mould (205) and/or at a local minimum.

5. Method according to any one of the preceding claims, **characterized in that** the opened mould (205), in particular, the mould base (208), a gaseous drying fluid and/or with thermal energy is applied by a drying device (405) at least intermittently.

6. Method according to any one of the preceding claims, **characterized in that** the execution of the tilting movement is temporally coupled to the opening of the mould, wherein, preferably, the drive for the tilting motion is mechanically coupled to the drive for opening the mould, in particular, being mechanically coupled to the drive that moves the mould base from the closed position into the open position.

7. Method of Claim 6, **characterized in that** all movements of the mould are carried out in a motion-coupled manner, i.e., the opening and closing of the lateral moulds, the mould base and the tilting movement of the mould base.

8. Forming station (16) for manufacturing containers filled with a liquid filling material (12) out of preforms (14) made of a thermoplastic material, wherein the forming station (16) comprises a forming and filling head (211) and a multi-part mould (205), and wherein the forming station (16) is designed to form a thermally conditioned preform (14) into the container (12) in the mould (205) during a forming and filling phase, filling it with a liquid filling material fed into the preform under a pressure as a pressure medium, wherein the forming station (16) preferably comprises a draw bar (209) and is designed to guide the preform (14) into the container (12) during the forming thereof and, during its filling, to guide it at least intermittently through the draw bar (209) and to stretch it in the axis direction, wherein the mould (205) is transferable from a closed state to an open state for iteratively loading it with a preform (14) and for subsequently removing a fully formed container (12), wherein the forming into the container (12) takes place against the inner wall (219) of the mould when the mould (205) is closed, wherein the mould (205) consists of a mould base (208) and at least two lateral mould halves (206, 207), wherein the mould base (208) and the lateral mould halves (206, 207) are moveably arranged against one another and border each other in the closed state at dividing lines (210), wherein the mould base (208) is arranged in a vertical direction below the lateral moulds (206, 207), **characterized in that** the forming station (16) comprises a liquid removal device (210, 412, 422, 300) for the removal of liquid from the mould (205) between successive preform (14) loading operations via the mould base (208) being arranged and designed to execute a tilting movement during or after transfer into its open state, in particular, starting with the transfer of the mould (205) from the closed into the open state.

9. Forming station (16) according to Claim 8, **characterized in that** the dividing line (210) between the mould base (208) and the lateral moulds (206, 207) is selected in such a way that at least in the vertical direction at the lowest points of the mould base (208) lie on this dividing line (210).

10. Forming station (16) according to any one of Claims 8 or 9, **characterized in that** a liquid draining device (412, 422) is arranged at the deepest region of the mould (205) and/or at a local minimum.

11. Forming station (16) according to any one of Claims 8 to 10, **characterized in that** the forming station (16) has a drying device (405) which is arranged and set up to at least intermittently apply a gaseous drying fluid and/or with thermal energy to the open mould(205), in particular, the mould base (208).

12. Forming station (16) according to any one of the preceding claims, **characterized in that** the mould (205), in particular, the mould base (208), is designed with a hydrophobic surface (419) and/or with a nanostructured surface (419) on its inner mould wall (219), thereby reducing the adhesion of liquid at least in sections, for the generation of the lotus effect.

13. Forming station (16) according to any one of Claims 8 to 12, **characterized in that** the execution of the tilting movement is temporally coupled to the opening of the mould, in particular, via the drive being mechanically coupled to the drive for the opening of the mould, in particular, being mechanically coupled to the drive that moves the mould base from the closed position to the open position.

14. Forming station (16) according to Claim 13, **characterized in that** all movements of the mould are carried out in a motion-coupled manner, i.e., the opening and closing of the lateral moulds, of the mould base, and the tilting movement.

15. Working wheel (110) with a plurality of forming stations (16) for manufacturing containers filled with a liquid filling material (12) out preforms (14) made of a thermoplastic material, wherein the working wheel (110) is continuously propelled to revolve, wherein the forming stations (16) are circumferentially distanced and arranged at a radial distance to a revolving axis (MA) on the working wheel (110), **characterized by** at least one forming station (16) with the features according to one of the Claims 8 to 14.

16. Device (10) for manufacturing containers filled with a liquid filling material (12) out of preforms (14) made of a thermoplastic material, with a heating device (116) for the temperature conditioning of the preform (14), with at least one forming station (16) comprising a mould (205), **characterized by** a forming station (16) according to one of the Claims 8 to 14 or by a working wheel (110) according to Claim 15.

## Revendications

1. Procédé de fabrication, à partir de préformes (14) en un matériau thermoplastique, de récipients (12) remplis d'un produit de remplissage liquide, chaque préforme (14) étant respectivement thermiquement conditionnée, après quoi, au cours d'une phase de moulage et de remplissage dans un moule (205) à plusieurs parties d'une station de formage (16), elle est transformée en un récipient (12) et remplie avec au moins un produit de remplissage liquide faisant fonction d'agent de pression introduit sous pression dans la préforme, la préforme (14) étant de préférence, temporairement au moins pendant sa transformation en récipient (12), guidée et étirée en sens axial par une barre d'étirage (209), le moule (205) pouvant passer d'un état fermé à un état ouvert pour les opérations répétitives d'introduction d'une préforme (14) et de retrait suivant du récipient (12) formé, la transformation en récipient (12) dans le moule (205) fermé ayant lieu par pression contre la paroi intérieure (219) du moule et le moule (205) étant formé par un fond de moule (208) et au moins deux demi-coquilles latérales (206, 207), le fond du moule (208) et les autres éléments du moule (206, 207) étant agencés de façon à être mobiles l'un par rapport à l'autre et, en position fermée, adjacents au niveau de lignes de séparation (210), le fond du moule (205) étant agencé, en sens vertical, sous les demi-coquilles latérales (206, 207), **caractérisé en ce qu'**une étape de vidange de liquide se trouvant dans le moule (205) est, temporairement au moins entre deux opérations chronologiquement successives d'introduction, effectuée **en ce que** le fond du moule (208) effectue lors du passage à l'état ouvert ou après celui-ci un mouvement de bascule, ce mouvement commençant notamment avec le passage du moule (205) de l'état fermé à l'état ouvert.

2. Procédé selon la revendication 1, **caractérisé en ce que** le procédé est réalisé avec une roue de travail (110) entraînée en rotation continue sur laquelle sont agencées avec un certain espacement périphérique et à une certaine distance radiale d'un axe de révolution (MA) plusieurs stations de formage (16) comportant respectivement un moule (205) à plusieurs parties, le mouvement de bascule étant de préférence effectué radialement vers l'extérieur.

3. Procédé selon la revendication 1 ou 2, **caractérisé en ce que** la ligne de séparation (210) entre le fond du moule (208) et les parties de moulage latérales (206, 207) est choisie de façon à ce que les points du fond du moule (208) les plus bas en sens vertical se trouvent, au moins par endroits, sur cette ligne de séparation (210).

4. Procédé selon l'une des revendications 1 à 3, **caractérisé en ce qu'**un dispositif d'évacuation de liquide (412, 422) est aménagé dans une zone la plus basse du moule (205) et/ou dans la zone d'un minimum local.

5. Procédé selon l'une des revendications précédentes, **caractérisé en ce que** le moule (205) ouvert et notamment le fond du moule (208) est, temporairement au moins, soumis à l'action d'un fluide de séchage et/ou d'énergie thermique provenant d'un dispositif de séchage (405).

6. Procédé selon l'une des revendications précédentes, **caractérisé en ce que** l'exécution du mouvement de bascule dans le temps est couplée à l'ouverture de la forme, le couplage étant de préférence un couplage mécanique entre l'entraînement assurant le mouvement de bascule et celui assurant l'ouverture du moule, notamment l'entraînement déplaçant le fond du moule de la position fermée vers la position ouverte.

7. Procédé selon la revendication 6, **caractérisé en ce que** tous les mouvements du moule, c'est-à-dire l'ouverture et la fermeture des parties de moulage latérales et du fond du moule ainsi que le mouvement de bascule, sont effectués en couplage cinématique.

8. Station de formage (16) pour la fabrication, à partir de préformes (14) en un matériau thermoplastique, de récipients (12) remplis d'un produit de remplissage liquide, la station de formage (16) présentant une tête de moulage et de remplissage (211) ainsi qu'un moule (205) comportant plusieurs parties, la station de formage (16) étant réalisée pour transformer au cours d'une phase de moulage et de remplissage dans le moule (205) une préforme (14) thermiquement conditionnée en un récipient (12) et la remplir avec un produit de remplissage liquide faisant fonction d'agent de pression introduit sous pression dans la préforme, la station de formage (16) présentant de préférence une barre d'étirage (209) et étant conçue pour que la préforme (14) soit, temporairement au moins pendant sa transformation en récipient (12) et pendant son remplissage, guidée et étirée en sens axial par la barre d'étirage (209), le moule (205) pouvant passer d'un état fermé à un état ouvert pour les opérations répétitives d'introduction d'une préforme (14) et de retrait suivant du récipient (12) formé, la transformation en récipient (12) dans le moule (205) fermé ayant lieu par pression contre la paroi intérieure (219) du moule et le moule (205) étant formé par un fond de moule (208) et au moins deux demi-coquilles latérales (206, 207), le fond du moule (208) et les demi-coquilles latérales (206, 207) étant agencés de façon à être mobiles l'un par rapport à l'autre et, en position fermée, adjacents au niveau de lignes de séparation (210), le fond du moule (208) étant agencé, en sens vertical, sous les demi-coquilles latérales (206, 207), **caractérisé en ce que** la station de formage (16) présente un dispositif d'évacuation de liquide (210, 412, 422, 300) pour évacuer, entre deux opérations chronologiquement successives d'introduction des préformes (14), du liquide se trouvant dans le moule (205), le fond du moule (208) étant, pour ce faire, agencé et conçu de façon à effectuer, lors du passage à l'état ouvert ou après celui-ci, un mouvement de bascule, ce mouvement commençant notamment avec le passage du moule (205) de l'état fermé à l'état ouvert.

9. Station de formage (16) selon la revendication 8, **caractérisée en ce que** la ligne de séparation (210) entre le fond du moule (208) et les parties de moulage latérales (206, 207) est choisie de façon à ce que les points du fond (208) du moule les plus bas en sens vertical se trouvent, au moins par endroits, sur cette ligne de séparation (210).

10. Station de formage (16) selon l'une des revendications 8 ou 9, **caractérisée en ce qu'**un dispositif d'évacuation de liquide (412, 422) est aménagé dans une zone la plus basse du moule (205) et/ou dans la zone d'un minimum local.

11. Station de formage (16) selon l'une des revendications 8 à 10, **caractérisée en ce que** la station de formage (16) présente un dispositif de séchage (405) agencé et aménagé de façon à soumettre, temporairement au moins, le moule (205) ouvert et notamment le fond (208) du moule à l'action d'un fluide de séchage et/ou d'énergie thermique.

12. Station de formage (16) selon l'une des revendications précédentes, **caractérisée en ce que** le moule (205), notamment le fond (208) du moule, présente au moins par endroits sur sa paroi intérieure (219) une surface hydrophobe (419) et/ou une surface (419) nanostructurée pour obtenir un effet lotus réduisant l'adhérence de liquide.

13. Station de formage (16) selon l'une des revendications 8 à 12, **caractérisée en ce que** l'exécution du mouvement de bascule dans le temps est couplée à l'ouverture de la forme, notamment par couplage mécanique entre l'entraînement assurant le mouvement de bascule et celui assurant l'ouverture du moule, notamment l'entraînement déplaçant le fond du moule de la position fermée vers la position ouverte.

14. Station de formage (16) selon la revendication 13, **caractérisée en ce que** tous les mouvements du moule, c'est-à-dire l'ouverture et la fermeture des parties de moulage latérales et du fond du moule ainsi que le mouvement de bascule, sont effectués en couplage cinématique.

15. Roue de travail (110) avec plusieurs stations de formage (16) pour la fabrication, à partir de préformes (14) en un matériau thermoplastique, de récipients (12) remplis d'un produit de remplissage liquide, la roue de travail (110) étant entraînée en rotation continue et les stations de formage (16) étant agencées sur la roue de travail (110) avec un certain espacement périphérique et à une certaine distance radiale d'un axe de révolution (MA), **caractérisée par** au moins une station de formage (16) présentant les caractéristiques selon l'une des revendications 8 à 14.

16. Dispositif (10) de fabrication, à partir de préformes (14) en un matériau thermoplastique, de récipients (12) remplis d'un produit de remplissage liquide, avec un dispositif de chauffage (116) pour le conditionnement thermique des préformes (14), avec au moins une station de formage (16) dotée d'un moule (205), **caractérisé par** une station de formage (16) selon l'une des revendications 8 à 14 ou par une roue de travail (110) selon la revendication 15.
